# EUROPEAN PATENT SPECIFICATION

(11) **EP 2 278 281 B1**
(45) Date of publication and mention of the grant of the patent: **07.03.2018**
(21) Application number: 10156663.6
(22) Date of filing: 16.03.2010
(51) Int. Cl.: G01F 1/66, G01F 15/14

(54) **Flow meter with reflector unit locked in relation to housing**
Durchflussmesser mit einem im Gehäuse eingerasteten Umlenkspiegelhalter
Débitmètre avec bloc réflecteur enclenché au boîtier

(30) Priority: 03.07.2009 EP 09164572; 15.12.2009 EP 09179317
(43) Date of publication of application: 26.01.2011
(73) Proprietor: Kamstrup A/S, 8660 Skanderborg (DK)
(72) Inventor: Laursen, Peter Schmidt, 8660 Skanderborg (DK); Nielsen, Søren Tønnes, 8355 Solbjerg (DK); Skallebæk, Anders, 8660 Skanderborg (DK)
(74) Representative: Plougmann Vingtoft a/s

(56) References cited:
- EP-A1- 0 897 102
- DE-B3- 10 327 076
- US-A1- 2006 288 798

## Description

### FIELD OF THE INVENTION

The invention relates to the field of flow meters, such as flow meters forming part of consumption meters such as a heat meter, a cooling meter, a water meter, or a gas meter. More specifically, the invention relates to an ultrasound flow meter with a reflector unit with means for locking its position in relation to a housing, once inserted during manufacturing.

### BACKGROUND OF THE INVENTION

Normally, ultrasound flow meters suited for measuring a fluid flow in connection with charging of a consumed quantity (e.g., heat, cooling, water or gas) will have a housing, which can be metallic or polymeric, with a cavity in the form of a through-going hole for receiving a fluid flow to be measured. Connection means to other fluid flow elements are present in each of the housing ends. In the housing a number of ultrasound transducers are installed for measuring the velocity of the fluid flow. In most flow meters two or more ultrasound transducers are used for sending, respectively receiving, an ultrasound signal.

In some prior art ultrasound flow meters, the ultrasound signals are guided on a path which is not along a direct line between the sending and receiving ultrasound transducer, but instead travel along a piecewise linear path where the direction is altered by at least one reflection along the way. This requires at least one reflective surface which reflects the ultrasound signals upon incidence, such that a path from a sending ultrasound transducer, over reflection on one or more reflective surfaces, to the receiving ultrasound transducer is realized.

Depending on the overall design each reflector unit consists of either one or more reflector holder parts that are preassembled with the reflector part before the assembled reflector unit is inserted in the flow meter housing. Insertion of the reflector unit in the flow meter housing can be either parallel to the direction of the flow through one of the ends of the through-going holes for the fluid flow, or it can be perpendicular to the direction of the flow through dedicated holes in the housing for the reflector unit and the ultrasound transducers. The latter is often seen with metallic compact flow meter housings, whereas installation through the through-going holes for the fluid flow is normal with polymeric compact flow meter housings.

EP 1 983 311 and EP 2 083 250 both show examples of an ultrasound flow meter with a generally cylindrical polymer housing part mounted onto a pressure carrying metal flow part with threaded ends for connection to a piping system. A transparent top lid serves to cover the opening to the cavity in the housing part where the electronic components, battery and display are placed. Further, DE 103 27 076 discloses a reflector arrangement comprising two separate reflector holders locked to a measuring tube by virtue of a collar. EP 0 897 102 discloses a reflector arrangement made of two separate elements locked to a housing via a circumferential groove. US 2006/288798 discloses a reflector arrangement forming a unit wherein first and second reflectors are formed together with a non-polymer holding plate.

### SUMMARY OF THE INVENTION

It may be seen as a problem with existing ultrasound flow meters that the number of manufacturing steps for assembly of the flow meter is too high to enable efficient low cost mass production.

In a first aspect, the invention provides an ultrasonic flow meter arranged to measure a fluid flow rate, the meter comprising a housing having a through-going opening arranged for passage of the fluid, and a unit comprising a measuring tube element and a reflector arrangement for mounting into the housing from one end of the through-going opening, wherein the reflector arrangement is a polymer unit with first and second reflector holders monolithically formed together with an intermediate member, each reflector holder comprises a reflector arranged to reflect an ultrasound signal, wherein the reflector arrangement comprises first locking means comprising an indentation or a protrusion arranged for mutual engagement with at least one corresponding locking means on a separate measuring tube element, so as to allow the measuring tube element to be substantially locked in position in relation to the reflector holder after mounting thereon, and wherein the unit comprising the measuring tube element and the reflector arrangement comprises second locking means comprising an indentation or a protrusion arranged for mutual engagement with at least one corresponding locking means positioned in the through-going opening of the housing, so as to allow the unit to be substantially locked in position within the through-going opening of the housing after mounting therein.

Due to the first and second locking means, the flow meter according to the first aspect allows efficient assembly of the reflector arrangement with the measuring tube element and subsequent assembly and locking of the reflector arrangement in position in the flow meter housing. Both of the first and second locking means may be in the form of "click locks" that provide irreversible locking, once the locking means are engaged. Hereby, tampering attempts in the form of removal of the reflector arrangement are prevented, since the locking means can be formed such that dismantling of the reflector arrangement from the housing requires special tools. However, in general "substantially locked in position" is construed as meaning that relative movement is locked or blocked in at least one degree of freedom, rather than meaning that the two parts are totally fixed to or attached to each other.

Especially, it may be preferred that the first locking means merely serves to lock relative movement between the measuring tube element and reflector arrangement in one degree of freedom, e.g. only in a longitudinal direction while a roll of a tubular measuring tube with circular cross section can be accepted. Such locking means may be in the form of a groove or recess or pin or hole arrangement on a monolithic structure comprising the reflector or reflector holder without the need for snapping or click locking the two parts together.

To obtain the mentioned tampering effect, it is preferred that the second locking means provides a snapping or click lock function to ensure that the reflector arrangement and the measuring tube element are fixed, preferably in all degrees of freedom, relative to the housing.

It is a further advantage, that one reflector arrangement can be used together with different measuring tube elements, e.g. versions with different diameter or different longitudinal cross section profiles. Thus, the same reflector arrangement can be used with different measuring tubes and thereby be suited for flow meters with different flow capacities.

The first and second locking means, and the reflector holders for holding the reflectors may be formed as one single monolithic element, such as a monolithic polymeric element. Hereby, the number of single elements forming a unit can be reduced to two: the reflector arrangement being a first element, and the measuring tube element being a second element. Thus, for such embodiment only two assembly steps are required to provide a flow meter housing with measuring tube and reflector(s): 1) locking the reflector arrangement and measuring tube together, and 2) locking the unit comprising the reflector arrangement and measuring tube element in position inside the housing. Especially, metal or ceramic reflectors may be attached to the reflector holders of the reflector arrangement, such that the metal or ceramic reflector are locked into position by means of a locking mechanism formed as part of the monolithic element. Preferred polymeric materials are such as polyphenylene sulphide (PPS) or polyether sulphone (PES). It is noted that the properties of the polymeric materials can be customized by adding certain additives prior to the moulding process, affecting the material properties such as stiffness, density or the acoustic impedance. Examples of potential additives include reinforcement materials such as glass fibres, density increasing fillers such as chalk (calcium carbonate, CaCO₃) or powdery stainless steel raising the acoustic impedance of the material. In such embodiment, the reflectors, i.e. the reflecting surface arranged to reflect ultrasound signals, is formed by the polymeric material. Preferably, a moulding process is used to form the reflector arrangement, and the shape of the reflector arrangement is preferably designed such that a minimum negative effect on the fluid flow in the measuring tube is provided.

Additionally, the flow meter may comprise two ultrasound transducer mounted in relation to the housing and operationally connected to a measurement circuit arranged to operate the ultrasound transducer.

The first locking means may comprise one or more indentations, such as one or more circular holes, arranged for engagement with one or more corresponding protrusion positioned on an outer surface of the measuring tube element. Thus, in such embodiment, a pin and hole arrangement is used to lock relative movement in at least one direction between the reflector arrangement and measuring tube element.

The first locking means may comprise a protrusion or indentation, wherein said protrusion or indentation is arranged to provide a click lock function upon engagement with a corresponding locking means on the measuring tube element. Thus, in such embodiment, it is possible to completely lock the measuring tube element and reflector arrangement together, e.g. using an irreversible interlocking. Especially, the first locking means comprises first and second sets of protrusions or indentations wherein said first and second sets are positioned for engagement with corresponding first and second locking means positioned on opposite sides of an outer surface of the measuring tube element. More specifically, the first locking means on the reflector arrangement may further comprise a protrusion or indentation arranged on a fixed part of the reflector arrangement, such as one or more circular holes, arranged for engagement with one or more corresponding third locking means positioned on an outer surface of the measuring tube element.

The measuring tube element may be a monolithic element, such as a monolithic polymeric element, with a through-going opening forming a measuring tube for passage of the fluid flow. Especially, the measuring tube element may have a general tubular shape. Alternatively, the measuring tube element may be shaped so as to form, together with a part of the reflector arrangement, a through-going opening forming a measuring tube for passage of the fluid flow. In all of these versions, only two separate elements are required to form the unit, irrespective of whether the measuring tube is formed by one self-contained element, or whether the measuring tube passage is formed by the assembly of the reflector arrangement and a measuring tube element which only together forms the measuring tube passage.

The measuring tube may be shaped with an inner measuring tube surface having a substantially circular cross section. Especially, a diameter of such circular cross section may vary along a length direction of the measuring tube, since this may provide advantages regarding the fluid flow profile in the measuring tube. The measuring tube may alternatively be shaped with an inner measuring tube surface having a non-circular cross section. Also, a cross section area of such non-circular cross section may be designed such that it varies along a direction of the measuring tube. Furthermore, an inner measuring tube surface may be shaped such that it has a non-straight extension in a length direction so as to cause the fluid to change direction of flow in the measuring tube, such as the inner measuring tube surface forming part of a U-shape or an S-shape seen in a longitudinal section. This measuring tube property may be combined with either the circular or non-circular cross section.

The through-going opening in the housing may have a substantially circular cross section, and wherein at least a part of the reflector arrangement has a corresponding outer shape so as to substantially fit to said circular cross section of the through-going opening.

The second locking means may comprise an indentation, wherein said protrusion or indentation is arranged to provide a click lock function upon engagement with a corresponding protrusion arranged inside the through-going opening of the housing.

Further, the first and second reflectors are arranged such in relation to each other that they can reflect an ultrasound signal between the first and second ultrasound transducers. Especially, the two reflecting surfaces are angled 45° in relation to the fluid direction and facing each other in a relative angle of 90°, thus suiting versions where the two ultrasound transducers to transmit/receive ultrasound signals in parallel directions.

Still further, the housing may be formed as a monolithic polymer structure shaped such that it forms the through-going opening and a cavity, wherein the cavity is arranged for at least partly housing the two ultrasound transducers and a measurement circuit operationally connected to the ultrasound transducers so as to allow measurement of the fluid flow rate of the fluid flowing through the through-going opening. The ultrasound transducers may be arranged to transmit ultrasound signals through a wall of the housing so as to transmit ultrasound signals in the fluid flowing in the through-going opening. In such embodiment, the ultrasound transducers operate according to the so-called matching layer principle.

At least a part of the second locking means may be positioned on the measuring tube element or on the reflector arrangement. In all cases the function of the second locking means is to lock the unit comprising the reflector arrangement and the measuring tube element in relation to the housing, and since the measuring tube element and the reflectors are locked in position by the first locking means, the second locking means can be positioned anywhere on the unit.

In a second aspect, the invention provides a consumption meter comprising a flow meter according to the first aspect. Especially, the consumption meter may be one of: a heat meter, a cooling meter, a water meter, and a gas meter.

However, even through the flow meter is suited for consumption meters or utility meters, the flow meter may also be used or integrated with other systems or devices within other areas of application.

### BRIEF DESCRIPTION OF THE DRAWINGS

Embodiments of the invention will be described, by way of example only, with reference to the drawings, in which
Figs. 1a and 1b illustrate in block diagram form two principle flow meter embodiments,
Figs. 2a-2c illustrate three different views of a flow meter embodiment, and
Fig. 3 illustrates a reflector arrangement embodiment where the measuring tube is formed partly by a reflector element and a measuring tube element.

### DESCRIPTION OF EMBODIMENTS

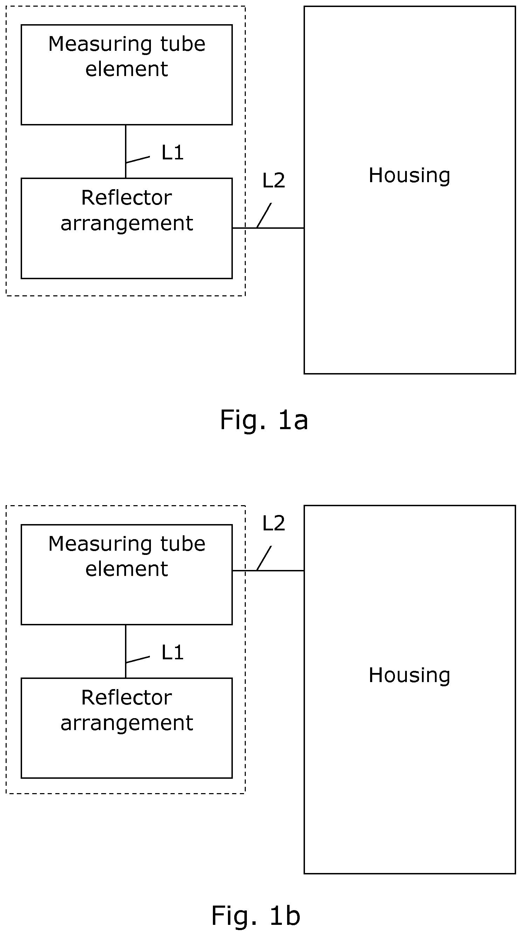

Figs. 1a and 1b illustrate in block diagram form two different flow meter embodiments. In both embodiments, a unit is provided which comprises a measuring tube element and a reflector arrangement having at least one reflector and possibly a reflector holder element. These elements are kept in position in relation to each other, at least in one direction, by first locking means L1. The first locking means L1 comprises an indentation/protrusion on each element arranged for mutual engagement, such as in the form of a click lock arrangement serving for locking the two elements together, once the first locking means is engaged.

In Fig. 1a, the reflector arrangement is locked to the housing by means of the second locking means L2 which includes an indentation/protrusion arranged on the reflector and reflector holder, preferably an indentation/protrusion on an outer surface of the reflector or reflector holder which serves to engage with a corresponding protrusion/indentation placed on the inner surface of the through-going opening of the housing into which the reflector arrangement is arranged to be mounted. It is preferred that the housing has a protrusion, since this can be directly provided in a moulding process on the inner surface of the through-going opening, whereas an indentation therein required a post moulding process.

In Fig. 1b, the unit comprising reflector arrangement and measuring tube element is locked to the housing by means of the second locking means L2 which includes an indentation/protrusion arranged on the measuring tube element, preferably on the outer surface of the measuring tube element and which serves to engage with a corresponding protrusion/indentation placed on the inner surface of the through-going opening of the housing into which the unit is arranged to be mounted.

It is to be understood that each of the first and second locking means L1, L2 may include a set of two or more separate locking means, such as a combination of a pin and hole arrangement for locking relative position in one direction and one or two click lock arrangements for irreversibly locking the two parts together, assisted by the pin and hole arrangement. Preferably, a reversible click lock arrangement is designed for the second locking means L2 such that the locking is not obtained before the desired relative position between the elements has been obtained, and thus the locking serves to maintain this position.

It is to be understood of course that the principles of Figs. 1a and 1b may be combined, such that separate second locking means L2 parts are provided on both of the measuring tube element and the reflector arrangement, thus further serving to lock the measuring tube element and the reflector arrangement to the housing.

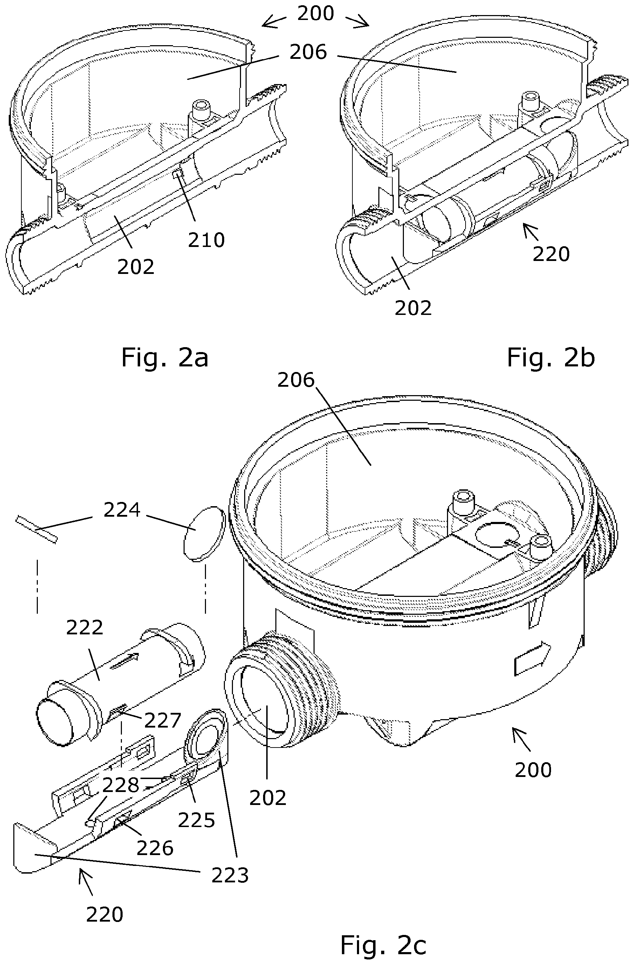

Figs. 2a-2c illustrate different views of a flow meter embodiment with a housing 200 having a generally cylindrical shape and with a generally cylindrically shaped through-going opening 202 forming a pressure-carrying fluid flow passage. The two ends of the through-going opening 202 are provided with threads serving for mounting to a piping system. The housing 200 in this embodiment is a monolithic polymer structure and has a cavity 206 for housing two ultrasound transducers and measurement circuits for operating the ultrasound transducers. The ultrasound transducers transmit/receive ultrasound signal to the flow passage 202 through a polymer wall of the housing 200 and thus operates according to the so-called matching layer principle. Thus, the cavity 206 is completely sealed from the fluid in the flow passage 202. Indentations of the separating wall serve to indicate positions of the transducers and constitute plane surfaces for the transducers when mounted. A calculator circuit for determining the consumed amount of fluid based on input from the measurement circuit, and a display for displaying a value representing the consumed amount of fluid may also be placed in the cavity 206 below a transparent lid mounted to the threaded top part of the housing 200. A small protrusion 210 is arranged on the inner surface of the through-going opening 202, i.e. inside the flow passage, serving for engagement with the reflector arrangement 220.

A reflector arrangement 220 is shown in exploded view and mounted in the housing in the partly cut-away view. A reflector holder element including two reflector holders 223 monolithically formed together with an intermediate member. Two holes 228 on this intermediate member are arranged for mutual engagement with (non-visible) pins on the measuring tube element 222. The two holes 228 form part of the first locking means serving to lock the measuring tube element 222 and the reflectors 223 together. The remaining part of the first locking means is formed by holes 226 in each side of flexible wings on the intermediate member. These holes 226 serve to engage with corresponding protrusions 227 on each side of the measuring tube element 222. Since the holes 226 are provided on flexible wings, the holes 226 are resiliently arranged in relation to the intermediate member and thus also to the reflector holders 223. Hereby, a click lock or snapping function is provided by engagement with the protrusions 227 on the measuring tube element 222, thus serving to lock the measuring tube element 222 to the reflector holders 223. The flexible wings also include holes 225, i.e. second locking means, arranged for mutual engagement with the corresponding protrusions 210 inside the flow passage 202. Again, the flexible wing serves to provide a click lock or snapping function between the holes 225 and the protrusions 210 after insertion through one end of the flow passage 202, thus locking the reflector arrangement 220 in position inside the flow passage 202.

In this embodiment, the measuring tube element 222 is in the form of a generally tubular element with a through-going opening for providing the measuring tube. When assembled, the reflectors 224 on the reflector holders 223 are placed outside both ends of the measuring tube element 222, and the reflectors 224 are angled 45° in relation to the fluid flow direction in the measuring tube element 222.

In this embodiment the reflector surfaces are formed by metal or ceramic reflectors 224, e.g. stainless steel, glued or directly clicked onto the reflector holders 223. The metal reflectors 224 could also be mounted during the moulding process of the reflector holders 223, such as moulded into the polymeric part. However, as mentioned earlier, the metal reflectors 224 can in principle be omitted, since the surfaces of the reflector holders 223 can be used as reflectors, provided that the reflector holders 223 are formed in a suitable material serving to provide an acceptable ultrasound reflection. As seen, the reflector holders 223 as smoothly shaped on the front/back parts such that a minimum disturbance of the fluid flow is created due to the presence of the reflector unit 220 in the flow. Preferably, the reflector holders 223, the intermediate member and the flexible wings with indentations in the form of through-going holes 225, 226 are moulded monolithically to form one single element. Preferably, the single element is moulded using PPS or PES materials, e.g. supplied with a substance serving to increase the ultrasound reflection so as to directly allow ultrasound reflection on the surfaces of the reflector holders 223, thereby making the metal reflectors 224 superfluous.

The measuring tube element 222, preferably made of polymer, is mounted on the reflector holder arrangement 220 by a snapping mechanism in the form of holes 226 in the reflector holder arrangement serving to engage with corresponding protrusions 227 on the side of the measuring tube element 222. Two pin shaped protrusions (not visible) on the measuring tube serve to engage with corresponding holes in the reflector holder arrangement, so as to help to fix the measuring tube element 222 relative to the reflector holder arrangement 220 in the fluid direction.

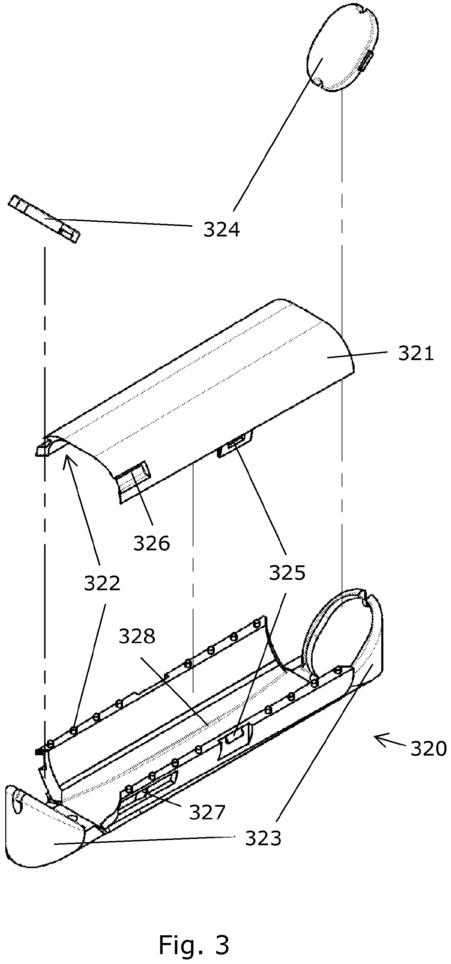

Fig. 3 illustrates an alternative reflector arrangement 320. Variants mentioned in connection with the reflector arrangement 220 of Figs. 2a-2c apply as well for the one 320 on Fig. 3. Again, reflector holders 323 serve to hold metal reflectors 324, or alternatively the holders 323 may be formed in a material with a sufficient ultrasound reflection making the metal reflectors 324 superfluous. In this embodiment 320, the measuring tube is formed by the measuring tube element 321 together with the intermediate structure interconnecting the reflector holders 323, preferably this part of the measuring tube is formed monolithically together with the reflector holders 323. The measuring tube element 321 has (non-visible) holes 322 arranged for mutual engagement with protrusions 322 on the reflector holder part. When assembled, the two parts are click locked or snapped together by means of a hole and protrusion arrangement 325.

After assembling the reflector arrangement 320, indentations 326 serve to lock the reflector arrangement 320 from rotation inside the through-going opening of the housing via engagement with a corresponding protrusion inside the flow passage. Further, indentations 327 serve to engage with corresponding protrusions so as to provide a click lock or snapping function which irreversibly locks the reflector arrangement 320 inside the flow passage.

As indicated in Fig. 3, the measuring tube provided has a non-circular cross section, and in addition the side-line 328 of the inner surface of the measuring tube is seen to be curved, and thus the measuring tube is non-straight but rather has a U-shaped seen in the length direction, and thus the cross section varies along the length direction, having the maximum cross section area in the centre part of the measuring tube, and with minimum cross section areas towards the end parts of the measuring tube.

It is to be understood that the locking means can be shaped differently than in the specifically disclosed and described embodiments, such as known by the skilled person. Thus different combinations of protrusions and indentations on fixed parts or resiliently mounted parts may serve to provide the desired reversible or irreversible position locking function.

To sum up, the invention provides an ultrasound flow meter for measuring a fluid flow rate comprising a housing 200 with a fluid flow passage 202. A reflector arrangement 220 comprising one or more reflectors 224 to reflect ultrasound signals. First locking means 226, 228 including an indentation or a protrusion is arranged for mutual engagement with corresponding locking means 227 on a separate measuring tube element 222, so as to allow the measuring tube element 222 to be substantially locked in position in relation to the reflector 224 or reflector holder 223. Second locking means 225 including an indentation or a protrusion is arranged for mutual engagement with at least one corresponding locking means 210 positioned in the flow passage 202 of the housing 200, so as to allow the reflector arrangement 220 to be substantially locked in position within the flow passage 202 of the housing 200. The reflector holder(s) 223 and the first locking means 226, 228, and the second locking means 225 is preferably monolithically formed in a polymeric material and provides click lock or snapping functions with the measuring tube element 222 and with the housing 200. Hereby a flow meter is provided which requires only few manufacturing steps, since first the measuring tube element 222 is clicked onto the reflector holder 223 element, and next the reflector arrangement 220 thus provided, is clicked into the flow passage 202 of the housing 200. The flow meter advantageously forms part of a consumption or utility meter, e.g. a water meter.

Although the present invention has been described in connection with preferred embodiments, it is not intended to be limited to the specific form set forth herein.

Rather, the scope of the present invention is limited only by the accompanying claims.

In this section, certain specific details of the disclosed embodiments are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. An ultrasound flow meter arranged to measure a fluid flow rate by means of ultrasound, the meter comprising
- a housing (200), having a through-going opening (202) arranged for passage of the fluid, and
- a unit comprising a measuring tube element (222) and a reflector arrangement (220) for mounting into the housing from one end of the through-going opening,
wherein the reflector arrangement is a polymer unit with first and second reflector holders (223) monolithically formed together with an intermediate member, each reflector holder comprises a reflector (224) arranged to reflect an ultrasound signal,
wherein the reflector arrangement comprises
- first locking means (L1, 226, 228) comprising an indentation or a protrusion arranged for mutual engagement with at least one corresponding locking means (227) on the separate measuring tube element, so as to allow the measuring tube element to be mounted on the reflector arrangement and locked by a snapping mechanism, and
wherein the unit comprising the measuring tube element and the reflector arrangement comprises
- second locking means (L2, 225) comprising an indentation or a protrusion arranged for mutual engagement with at least one corresponding locking means (210) positioned inside the through-going opening of the housing, so as to allow the unit to be substantially locked in position within the through-going opening of the housing after mounting therein.

2. Flow meter according to any of the preceding claims, wherein the first locking means comprises one or more indentations (226, 228) arranged for engagement with one or more corresponding protrusion positioned on an outer surface of the measuring tube element (222).

3. Flow meter according to any of the preceding claims, wherein the first locking means comprises a protrusion or indentation (226), wherein said protrusion or indentation (226) is arranged to provide a click lock function upon engagement with a corresponding locking means (227) on the measuring tube element (222).

4. Flow meter according to any of the preceding claims, wherein the measuring tube element (222) is a monolithic element, with a through-going opening forming a measuring tube for passage of the fluid flow.

5. Flow meter according to any of claims 1-3, wherein the measuring tube element (321) is shaped so as to form, together with a part of the reflector holder element (323), a through-going opening forming a measuring tube for passage of the fluid flow.

6. Flow meter according to claim 5, wherein the first reflector or a first reflector holder (323) is monolithically formed together with the intermediate member shaped so as to form part of an inner surface of the measuring tube.

7. Flow meter according to any of the preceding claims, wherein the second locking means comprises an indentation (225), wherein said protrusion or indentation (225) is arranged to provide a click lock function upon engagement with a corresponding protrusion (210) arranged inside the through-going opening (202) of the housing (200).

8. Flow meter according to any of the preceding claims, wherein the housing (200) is formed as a monolithic polymer structure and shaped such that it forms the through-going opening (202) and a cavity (206), wherein the cavity (206) is arranged for at least partly housing first and second ultrasound transducers and a measurement circuit operationally connected to the ultrasound transducers so as to allow measurement of the fluid flow rate of the fluid flowing through the through-going opening (202).

9. Flow meter according to any of the preceding claims, wherein at least a part of the second locking means is positioned on the measuring tube element (222).

10. Flow meter according to any of the preceding claims, wherein at least a part of the second locking means (225) is positioned on the reflector or reflector holder (223).

11. Consumption meter comprising a flow meter according to any of the preceding claims, wherein the consumption meter is one of: a heat meter, a cooling meter, a water meter, and a gas meter.

## Patentansprüche

1. Ultraschalldurchflussmesser, der dazu angeordnet ist, eine Fluiddurchflussrate mittels Ultraschall zu messen, wobei der Messer Folgendes umfasst:
- ein Gehäuse (200), das eine durchgehende Öffnung (202) aufweist, die für einen Durchgang des Fluids angeordnet ist, und
- eine Einheit umfassend ein Messrohrelement (222) und eine Umlenkspiegelanordnung (220) zum Befestigen in dem Gehäuse von einem Ende der durchgehenden Öffnung,
wobei die Umlenkspiegelanordnung eine Polymereinheit mit erstem und zweitem Umlenkspiegelhalter (223) ist, die einstückig zusammen mit einem Zwischenelement gebildet ist, wobei jeder Umlenkspiegelhalter einen Umlenkspiegel (224) umfasst, der dazu angeordnet ist, ein Ultraschallsignal umzulenken,
wobei die Umlenkspiegelanordnung Folgendes umfasst:
- ein erstes Verriegelungsmittel (L1, 226, 228), umfassend eine Vertiefung oder einen Vorsprung, die/der für gemeinsames Eingreifen mit zumindest einem Verriegelungsmittel (227) an dem separaten Messrohrelement angeordnet ist, um es so dem Messrohrelement zu ermöglichen, an der Umlenkspiegelanordnung befestigt zu sein und durch einen Schnappmechanismus verriegelt zu sein, und
wobei die Einheit umfassend das Messrohrelement und die Umlenkspiegelanordnung Folgendes umfasst:
- ein zweites Verriegelungsmittel (L2, 225) umfassend eine Vertiefung oder einen Vorsprung, die/der für gemeinsames Eingreifen mit zumindest einem Verriegelungsmittel (210), das innerhalb der durchgehenden Öffnung des Gehäuses positioniert ist, angeordnet ist, um es so der Einheit zu ermöglichen, im Wesentlichen in Position innerhalb der durchgehenden Öffnung des Gehäuses verriegelt zu sein, nachdem sie darin befestigt wurde.

2. Durchflussmesser nach einem der vorstehenden Ansprüche, wobei das erste Verriegelungsmittel eine oder mehrere Vertiefungen (226, 228) umfasst, die zum Eingreifen mit einem oder mehreren entsprechenden Vorsprüngen, die an einer äußeren Oberfläche des Messrohrelements (222) positioniert sind, angeordnet sind.

3. Durchflussmesser nach einem der vorstehenden Ansprüche, wobei das erste Verriegelungsmittel einen Vorsprung oder eine Vertiefung (226) umfasst, wobei der Vorsprung oder die Vertiefung (226) dazu angeordnet ist, eine Klick-Verriegelungsfunktion beim Eingreifen mit einem entsprechenden Verriegelungsmittel (227) an dem Messrohrelement (222) bereitzustellen.

4. Durchflussmesser nach einem der vorstehenden Ansprüche, wobei das Messrohrelement (222) ein einstückiges Element mit einer durchgehenden Öffnung, die ein Messrohr zum Durchgang des Fluidstroms bildet, ist.

5. Durchflussmesser nach einem der Ansprüche 1-3, wobei das Messrohrelement (321) so geformt ist, dass es zusammen mit einem Teil des Umlenkspiegelhalterelements (323) eine durchgehende Öffnung bildet, die ein Messrohr zum Durchgang des Fluidstroms bildet.

6. Durchflussmesser nach Anspruch 5, wobei der erste Umlenkspiegel oder ein erster Umlenkspiegelhalter (323) einstückig zusammen mit dem Zwischenelement gebildet ist, das so geformt ist, dass er einen Teil der inneren Oberfläche des Messrohrs bildet.

7. Durchflussmesser nach einem der vorstehenden Ansprüche, wobei das zweite Verriegelungsmittel eine Vertiefung (225) umfasst, wobei der Vorsprung oder die Vertiefung (225) dazu angeordnet ist, eine Klick-Verriegelungsfunktion beim Eingreifen mit einem entsprechenden Vorsprung (210), der innerhalb der durchgehenden Öffnung (202) des Gehäuses (200) angeordnet ist, bereitzustellen.

8. Durchflussmesser nach einem der vorstehenden Ansprüche, wobei das Gehäuse (200) als eine einstückige Polymerstruktur gebildet ist und so geformt ist, dass es die durchgehende Öffnung (202) und einen Hohlraum (206) bildet, wobei der Hohlraum (206) dazu angeordnet ist, zumindest teilweise einen ersten und zweiten Ultraschallwandler aufzunehmen und eine Messschaltung mit den Ultraschallwandlern wirkverbunden ist, um so eine Messung der Fluidstromrate des Fluids, das durch die durchgehende Öffnung (202) strömt, zu messen.

9. Durchflussmesser nach einem der vorstehenden Ansprüche, wobei zumindest ein Teil des zweiten Verriegelungsmittels auf dem Messrohrelement (222) positioniert ist.

10. Durchflussmesser nach einem der vorstehenden Ansprüche, wobei zumindest ein Teil des zweiten Verriegelungsmittels (225) auf dem Umlenkspiegel oder dem Umlenkspiegelhalter (223) positioniert ist.

11. Verbrauchsmesser, umfassend einen Durchflussmesser nach einem der vorstehenden Ansprüche, wobei der Verbrauchsmesser einer der Folgenden ist: ein Wärmemesser, ein Kühlungsmesser, ein Wassermesser und ein Gasmesser.

## Revendications

1. Débitmètre à ultrasons agencé pour mesurer un débit de fluide au moyen d'ultrasons, le compteur comprenant
- un boîtier (200), possédant une ouverture traversante (202) agencée pour le passage du fluide, et
- une unité comprenant un élément de tube de mesure (222) et un agencement de réflecteurs (220) pour le montage dans le boîtier à partir d'une extrémité de l'ouverture de traversante,
ledit agencement de réflecteurs étant une unité en polymère avec des premier et second supports de réflecteur (223) formés ensemble d'un seul bloc, avec un élément intermédiaire, chaque support de réflecteur comprenant un réflecteur (224) agencé pour réfléchir un signal ultrason,
ledit agencement de réflecteurs comprenant
- un premier moyen de verrouillage (L1, 226, 228) comprenant un enfoncement ou une partie saillante agencé(e) pour une mise en prise mutuelle avec au moins un moyen de verrouillage correspondant (227) sur l'élément de tube de mesure séparé, de façon à permettre à l'élément de tube de mesure d'être monté sur l'agencement de réflecteurs et verrouillé par un mécanisme d'encliquetage, et
ladite unité comprenant l'élément de tube de mesure et ledit agencement de réflecteurs comprenant
- un second moyen de verrouillage (L2, 225) comprenant un enfoncement ou une partie saillante agencé(e) pour une mise en prise mutuelle avec au moins un moyen de verrouillage correspondant (210) positionné à l'intérieur de l'ouverture traversante du boîtier, de façon à permettre à l'unité d'être sensiblement verrouillée en position dans l'ouverture traversante du boîtier après montage dans celle-ci.

2. Débitmètre selon l'une quelconque des revendications précédentes, ledit premier moyen de verrouillage comprenant un ou plusieurs enfoncements (226, 228) agencés pour une mise en prise avec une ou plusieurs parties saillantes correspondantes positionnées sur une surface externe de l'élément de tube de mesure (222).

3. Débitmètre selon l'une quelconque des revendications précédentes, ledit premier moyen de verrouillage comprenant une partie saillante ou un enfoncement (226), ladite partie saillante ou ledit enfoncement (226) étant agencé(e) pour fournir une fonction de verrouillage par encliquetage lors de la mise en prise avec un moyen de verrouillage correspondant (227) sur l'élément de tube de mesure (222).

4. Débitmètre selon l'une quelconque des revendications précédentes, ledit élément de tube de mesure (222) étant un élément d'un seul bloc avec une ouverture-traversante formant un tube de mesure pour le passage de l'écoulement de fluide.

5. Débitmètre selon l'une quelconque des revendications 1 à 3, ledit élément de tube de mesure (321) étant façonné de façon à former, ensemble avec une partie de l'élément de support de réflecteur (323), une ouverture traversante formant un tube de mesure pour le passage de l'écoulement de fluide.

6. Débitmètre selon la revendication 5, ledit premier réflecteur ou un premier support de réflecteur (323) étant formé ensemble d'un seul bloc avec l'élément intermédiaire façonné de façon à former une partie d'une surface interne du tube de mesure.

7. Débitmètre selon l'une quelconque des revendications précédentes, ledit second moyen de verrouillage comprenant un enfoncement (225), ladite partie saillante ou ledit enfoncement (225) étant agencé(e) pour fournir une fonction de verrouillage par encliquetage lors de la mise en prise avec une partie saillante correspondante (210) agencée à l'intérieur de l'ouverture traversante (202) du boîtier (200).

8. Débitmètre selon l'une quelconque des revendications précédentes, ledit boîtier (200) étant formé sous la forme d'une structure d'un seul bloc en polymère et façonné de sorte qu'il forme l'ouverture traversante (202) et une cavité (206), ladite cavité (206) étant agencée pour loger au moins en partie les premier et second transducteurs d'ultrasons et un circuit de mesure raccordé fonctionnellement aux transducteurs d'ultrasons de façon à permettre la mesure du débit d'écoulement de fluide s'écoulant à travers l'ouverture traversante (202).

9. Débitmètre selon l'une quelconque des revendications précédentes, au moins une partie du second moyen de verrouillage étant positionnée sur l'élément de tube de mesure (222).

10. Débitmètre selon l'une quelconque des revendications précédentes, au moins une partie du second moyen de verrouillage (225) étant positionnée sur le réflecteur ou sur le support de réflecteur (223).

11. Compteur de consommation selon l'une quelconque des revendications précédentes, ledit compteur de consommation étant l'un de : un compteur de chauffage, un compteur de refroidissement, un compteur d'eau et un compteur de gaz.
